# EUROPEAN PATENT SPECIFICATION

(11) **EP 2 765 037 B1**
(45) Date of publication and mention of the grant of the patent: **20.01.2016**
(21) Application number: 13154934.7
(22) Date of filing: 12.02.2013
(51) Int. Cl.: B60R 21/36

(54) **A pedestrian airbag arrangement**
Fußgänger-Airbaganordnung
Agencement d'airbag pour piétons

(43) Date of publication of application: 13.08.2014
(73) Proprietor: Autoliv Development AB, 447 83 Vårgårda (SE)
(72) Inventor: Lindberg, Ken, 441 46 Alingsâs (SE); Östling, Martin, 507 33 Brämhult (SE)
(74) Representative: Parry, Simon James

(56) References cited:
- EP-A1- 2 428 412
- EP-A2- 1 391 353
- EP-A2- 1 577 172
- WO-A1-2013/081528
- DE-A1-102005 049 209
- JP-A- 2008 290 471

## Description

The present invention relates to a pedestrian airbag arrangement on a motor vehicle having a windscreen.

When a motor vehicle is involved in a frontal impact with a pedestrian, it is common for the body of the pedestrian to strike the windscreen of the vehicle which can result in serious injury to the pedestrian, and significant damage to the vehicle. In an attempt to alleviate this, it has been proposed to provide a motor vehicle with a so-called pedestrian airbag which, if vehicle sensors indicate that a collision with a pedestrian is occurring or is likely to occur, inflates to cover a central portion of the windscreen, and/or the left and right A-pillars of the vehicle. Typically, an airbag of this general type is provided in an initially tightly folded and/or rolled package and is stored beneath a rear part of the vehicle's hood or bonnet, or beneath a cowl which is provided between the base of the windscreen and the rear part of the hood or bonnet. The rear of the hood or bonnet may be lifted by a suitable air-bag, piston or other arrangement to allow sufficient space for the pedestrian airbag to inflate so that it deploys in a manner effective to cover at least part of the windscreen and/or A-pillars of the vehicle, thereby cushioning the impact of a pedestrian with these parts of the vehicle. Alternatively, it is also possible to configure the pedestrian airbag such that as it begins inflation it performs the hood-lifting function itself. Such an arrangement may incorporate a cell structure to the pedestrian airbag beneath the hood, or may comprise a structure adjacent the airbag to guide the airbag for inflation in a direction effective to lift the rear part of the hood or bonnet.

As will be appreciated, however, space beneath the rear part of a vehicle's hood or bonnet can be very limited which makes it difficult to conveniently package a sufficiently large airbag to ensure adequate protection for a pedestrian. Also, the larger the airbag which is successfully packaged in such an arrangement, then the larger the volume of gas required to inflate the airbag (which also necessitates a larger inflator). Relying on a large volume of gas to inflate a pedestrian airbag generally results in a slower deployment time which can adversely affect the effectiveness of the airbag in preventing or reducing injuries to a pedestrian.

It has therefore been proposed previously to provide a pedestrian airbag comprising a relatively large primary chamber and a plurality of relatively small secondary chambers, the airbag being configured such that the secondary chambers inflate into respective positions in spaced relation to one another and each between the primary chamber and the vehicle's windscreen in order to space the primary chamber from the windscreen. Such an arrangement has been found to provide good protection to a pedestrian, in the form of a relatively "thick" airbag, without necessitating an excessive volume of gas to inflate the airbag.

Document EP2428412 A1 discloses a vehicle according to the preamble of claim 1. Nevertheless, previously proposed airbags of the type described above are not without their problems, nor a need for improvement in their effectiveness and performance. For example, it has been found that airbags of the type proposed above, having a primary inflatable chamber and a plurality of spaced apart secondary chambers, can provide less than ideal performance in the event that a pedestrian strikes the front of the primary airbag in a region aligned, or close to, one of the secondary chambers. In particular, it has been found that in such an area of the airbag, the arrangement can provide an excessive rebound effect which causes the pedestrian to "bounce" off the airbag and be thrown forwardly, rather than to absorb all of the energy of the pedestrian's impact with the airbag.

It is therefore a preferred object of the present invention to provide an improved pedestrian airbag arrangement.

According to the present invention, there is provided a motor vehicle having a windscreen and a pedestrian airbag arrangement, the airbag arrangement having an airbag defining an inflatable volume for the receipt of inflating gas, the inflatable volume having a primary chamber configured for inflation upon deployment of the airbag so as to extend over or across at least part of the windscreen; and a plurality of secondary chambers, each said secondary chamber being configured for inflation upon deployment of the airbag so as to adopt a respective deployed position between the primary chamber and the windscreen to thereby space the primary chamber from the windscreen, the arrangement being characterised in that at least one of said secondary chambers is of a type configured to inflate to a predetermined maximum thickness measured across the chamber and has a structure defining a region of the chamber which is restricted from inflating to said maximum thickness to thereby provide a localised narrowing of the chamber about which the chamber is configured to fold and/or buckle upon impact of a pedestrian against the primary chamber.

Preferably, each said secondary chamber is formed from two superimposed layers of flexible material, and wherein said at least one secondary chamber is configured such that said layers of flexible material are interconnected in said region of the chamber which is restricted from inflating to said maximum thickness.

Advantageously, said region has a two-dimensional area throughout which said layers are interconnected.

Conveniently, said flexible material is fabric and said layers are stitched to one another throughout said region.

Preferably, said flexible material is fabric, and the yarns of one said layer are interwoven with the yarns of the other said layer throughout said region.

Advantageously, said layers are adhesively secured to one another throughout said region.

Conveniently, said region is defined by a seam interconnecting said layers.

Preferably, said seam is substantially linear.

Advantageously, said seam is formed by stitching together said layers.

Conveniently, said region of said at least one secondary chamber is completely surrounded by an inflatable region of the chamber which is substantially unrestricted from inflating to said maximum thickness.

Preferably, said at least one secondary chamber is configured such that said region is generally equi-spaced from said primary chamber and from said windscreen when the airbag is fully inflated but undeformed by impact.

Advantageously, the deployed positions of the secondary chambers are spaced apart from one another in a transverse direction across the vehicle.

Conveniently, the secondary chambers are made from flexible material which is thinner and/or of reduced weight compared to the material from which the primary chamber is made.

Preferably, said plurality of secondary chambers includes relatively small secondary chambers and relatively large secondary chambers, each said relatively large secondary chamber being of said type configured to inflate to a predetermined maximum thickness measured across the chamber and has a structure defining a region of the chamber which is restricted from inflating to said maximum thickness to thereby provide a localised narrowing of the chamber about which the chamber is configured to fold and/or buckle upon impact of a pedestrian against the primary chamber, and each said relatively small secondary chamber having no such structure to restrict inflation or provide a narrowing of the chamber.

Advantageously, each said relatively small chamber is configured to deploy against a central region of the vehicle windscreen, and each said relatively large chamber is configured to deploy against a side region of the vehicle windscreen.

So that the invention may be more readily understood, and so that further features thereof may be appreciated, embodiments of the invention will now be described by way of example with reference to the accompanying drawings in which:
Figure 1 is a plan view showing an initial stage in the production of a pedestrian airbag embodying the present invention, illustrating two superimposed sheets of flexible material;
Figure 2 is a view corresponding generally to that of figure 1, showing the superimposed sheets connected around their peripheral edges to define a primary chamber of the airbag;
Figure 3 is a plan view from below showing the partially constructed airbag of figure 2;
Figure 4 is a side view showing a secondary chamber formed from sheets of flexible material;
Figure 5 is a plan view from below similar to that of figure 3, but which shows the primary chamber connected to a plurality of secondary chambers of the type shown in figure 4;
Figure 6 is a schematic cross sectional view taken through the airbag of figure 5, showing the airbag as it is inflated and deployed against the windscreen of a motor vehicle in the event of actuation;
Figure 7 is a perspective view showing part of the airbag deployed against the windscreen of the motor vehicle, with the airbag in a substantially un-deformed condition;
Figure 8 is a view corresponding to that of figure 7, but which shows the airbag upon initial contact with the head and/or torso of a pedestrian in an impact situation;
Figure 9 is a view corresponding to that of figure 8, but which shows the airbag at a later stage of the impact, showing the primary and secondary chambers deformed under the energy of impact with the pedestrian; and
Figure 10 is a side view similar to that of figure 4, but which shows a secondary chamber of an alternative configuration.

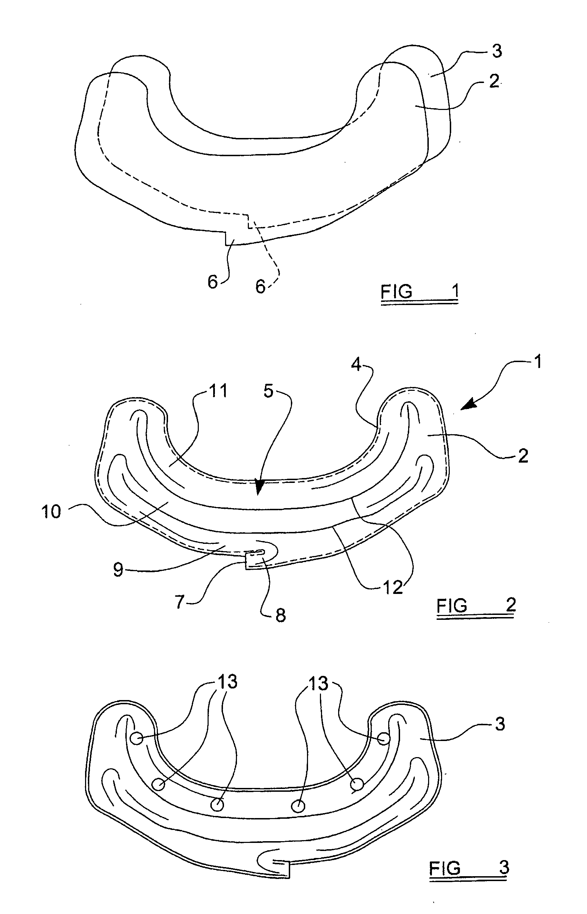

Figure 1 shows a pair substantially identical primary sheets 2, 3 of flexible material from which the pedestrian airbag 1 is produced. The sheets 2, 3 are preferably formed from woven fabric material and in the embodiment illustrated are both elongate and somewhat arcuate. The sheets 2, 3 are shown in figure 1 in superimposed relation to one another. As shown in figure 2, the two sheets 2, 3 are interconnected along substantially the entire extent of their peripheral edges by a peripheral seam 4 to define a primary inflatable chamber 5 between the sheets for the receipt of inflating gas. The primary chamber 5 is elongate and generally arcuate.

As will be noted, each sheet 2, 3 is provided with an outwardly projecting tab 6 at a generally central position along one of its long sides. The two tabs 6 are aligned when the sheets are superimposed, and the peripheral seam 4 connecting the two sheets begins at one corner of the aligned tabs 6, runs around the periphery of the arcuate sheets, and terminates at an opposite corner of the aligned tabs 6. The tabs 6 are thus unconnected along their aligned free edges 7 and so cooperate to form an open neck 8 to the airbag, the neck defining a gas inlet aperture to the airbag. As illustrated, the neck 8 is arranged so as to be generally tangential to the central region of the airbag, and is intended to receive an inflator such as a gas generator in a known manner, such that upon actuation of the inflator a large volume of inflating gas will be directed into the interior volume of the primary inflatable chamber 5, thereby inflating the airbag 1.

As also illustrated in figure 2, the primary inflatable chamber 5 is sub-divided into a plurality of inflatable cells. In the particular arrangement illustrated, the primary chamber 5 is sub-divided into three discrete adjacent cells 9, 10, 11, each of which is elongate and generally arcuate in form. The primary chamber 5 can be sub-divided into the cells 9, 10, 11 in various different ways. For example, baffles formed of similar flexible material to the sheets 2, 3 may be provided across the chamber 5 so as to extend from one sheet 2 to the other sheet 3 in order to define boundaries between adjacent cells. Alternatively, as in the example illustrated, the top and bottom sheets 2, 3 may simply be stitched together along arcuate seams 12 to define the boundaries between neighbouring cells 9, 10, 11. As will be noted, the cells 9, 10, 11 are each inflatable and are provided in fluid communication with one another around the ends of the seams 12. Sub-division of the primary chamber 5 into cells 9, 10, 11 in this manner is known *per se* and is effective to focus the effect of inflating gas from the inflator in inflating the airbag to achieve maximum length (as measured transversely across the windscreen of a motor vehicle when installed) very quickly upon deployment.

Figure 3 shows the airbag of figure 2 turned upside down so that its lower sheet 3 is facing upwards. As can be seen, the lower sheet 3 is provided with a plurality of apertures 13. The apertures 13 are spaced apart from one another along the length of the sheet 3, and they are all provided in fluid communication with the cell 11 of the primary chamber 5 which is most remote from the neck 8, and thus will be remote from the inflator when the airbag 1 is fully assembled.

Whilst the primary chamber 5 has been described above as being formed from two separate sheets 2, 3 of fabric which are superimposed and stitched together, it is to be appreciated that the chamber could alternatively be formed by a so-called "one-piece weaving" technique of a type known *per se* in which the yarns of two layers of fabric are interwoven with each other to define the peripheral seam 4 as the two layers are simultaneously woven. In such an arrangement, the sub-dividing seams 12 between adjacent cells 9, 10, 11 can also be created in a similar manner so that all the seams are integral to the woven structure of the fabric.

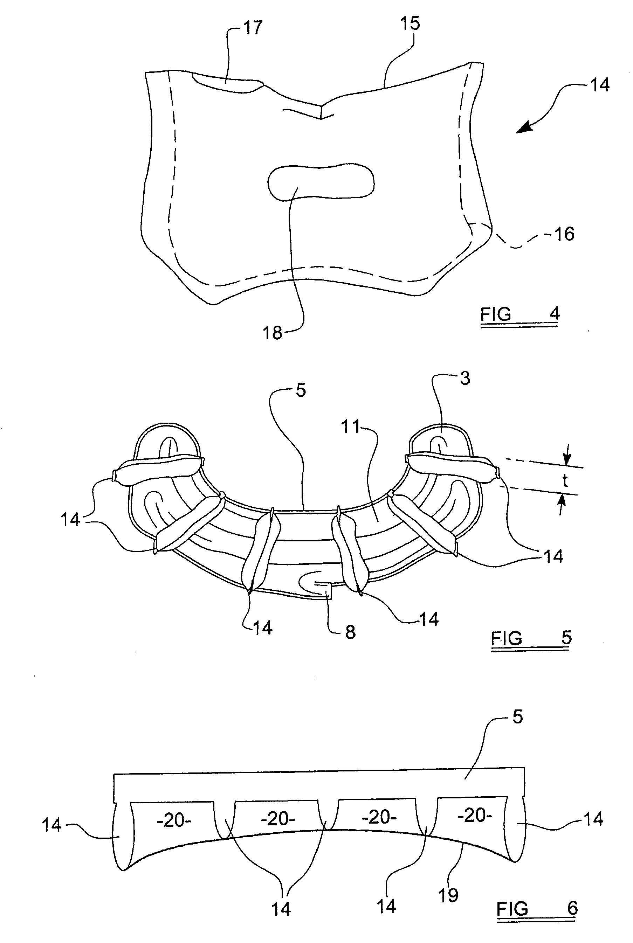

Turning now to consider figure 4, there is shown a secondary inflatable chamber 14. The secondary chamber 14 is formed from similar flexible material (preferably fabric) as the primary chamber 5, although it is possible to form the secondary chamber 14 from thinner, and thus lighter weight material than the primary chamber 5. For example, the primary chamber 5 can be formed from sheets 2, 3 of 470 dTex fabric whilst the secondary chamber can be formed from 235 dTex fabric.

The secondary chamber 14 is preferably formed from a single rectangular sheet of fabric material which is folded in half about a fold line 15 to define a pair of superimposed half-sheet layers. The three free edges of the two resulting layers of the sheet are then interconnected, for example by stitching, to define a peripheral seam 16. Alternatively, the secondary chamber 14 can be created by a "one-piece weaving" technique similar to that proposed above in connection with the primary chamber 5.

At a position adjacent one end of the fold line 15, there is provided an inlet aperture 17 in the fabric of the secondary chamber 14. The inlet aperture is preferably either the same size as, or slightly larger than, the apertures 13 provided in the lower sheet 3 of the primary chamber 5.

It is important to note that the two layers of the fabric sheet defining the secondary chamber 14 are furthermore interconnected in a generally central region 18. In the particular embodiment illustrated in figure 4, the two layers of fabric are interconnected over a two-dimensional area having a generally rectangular shape. However, it is to be appreciated that the region 18 could have an alternative shape such as, for example, an ovoid shape. The interconnected region can be created in a number of different ways, such as by one-piece weaving as described above, by adhesively bonding the two layers together, or even by heat treatment to fuse the layers together. However, in a simple arrangement the interconnected region 18 may be formed by stitching the two layers together over substantially the entire area of the central region 18. It is also possible for the interconnected region 18 to be defined by a narrow seam peripheral around aligned apertures provided through the two layers, the seam serving to interconnect the layers.

The resulting form of the secondary chamber 14 thus has a central region defined by the interconnected region 18 which is not inflatable, and which is entirely surrounded by an inflatable region defined between the two layers of fabric. This inflatable region is configured to inflate to a predetermined maximum thickness measured across the chamber 14. The interconnected region 18 provides a structure to the chamber which restricts inflation of the chamber in the region 18 to its maximum thickness.

As shown in figure 5, which again shows the primary chamber 5 as viewed from below, a plurality of secondary chambers 14 as described above are connected to the lower sheet 3 of the primary chamber. The secondary chambers 14 are spaced apart from one another, with each arranged such that its inlet aperture 17 is aligned with and mounted over a respective aperture 13 in the lower sheet 3 of the primary chamber to define respective flow ports between the primary chamber 5 and the secondary chambers 14. It will also be noted that each secondary chamber is connected to the lower sheet 3 of the primary chamber 5 along its fold line 15, and extends from the position of a respective aperture in the lower sheet 3, in the region of the cell 11 distal to the neck, to a position adjacent the cell 9 proximate the neck 8. In the arrangement illustrated, the secondary chambers are arranged so that each is generally orthogonal to an adjacent region of the primary chamber, which means that because the primary chamber 5 is arcuate in form the secondary chambers are divergent with respect to one another.

Figure 6 is a schematic illustration showing the relationship between the primary chamber 5 and the secondary chambers 14 to the windscreen 19 of a motor vehicle. In a generally known manner, upon actuation of the safety arrangement the inflator (not shown) is activated which directs an inflating volume of gas into the primary chamber 5 via the neck 8. The primary chamber 5 rapidly inflates, typically from a stowed position beneath the rear part of the hood or bonnet of the vehicle, and quickly develops over the windscreen on account of its internal structure of cells 9, 10, 11. As the cell 11 remote from the neck 8 and its associated inflator inflates, secondary flows of gas pass through the flow ports provided by the aligned apertures 13, 17 to inflate the secondary chambers 14 into the positions illustrated in figure 6, in which each secondary chamber 14 spaces the primary chamber 5 from the windscreen 19, with spaces 20 being created between neighbouring secondary cells.

As will be noted, to account for the transverse curvature of the windscreen 19, the secondary chambers located in the central region of the windscreen can be smaller in terms of their extension from the primary chamber than the secondary chambers located towards the side edges of the windscreen, adjacent the A-pillars of the vehicle.

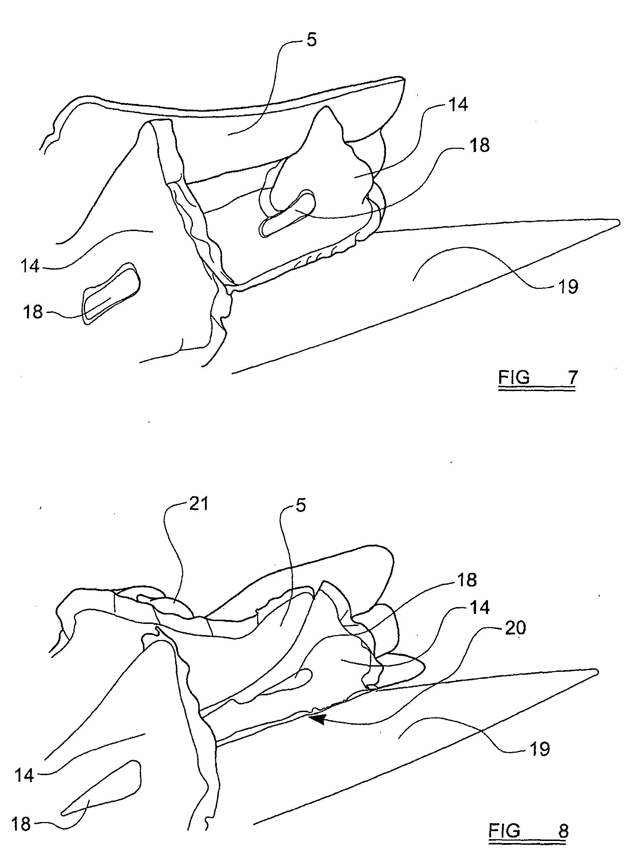

Figure 7 illustrates in perspective view a pair of neighbouring secondary chambers 14, and part of the primary chamber 5 in their inflated positions with respect to the windscreen 19 of the vehicle. Figure 7 is representative of the inflated but un-deformed condition of the airbag 1 upon actuation but prior to impact with a pedestrian.

Figure 8 illustrates a successive stage in an impact with a pedestrian, and in particular shows the head 21 or torso of a pedestrian making forcible impact with the front sheet 2 of the primary chamber 5. As will be noted, the gap 20 behind the primary chamber 5 and between the neighbouring secondary chambers 14 permits the primary chamber 5 to deform towards the windscreen 19 under the force of the pedestrian 21.

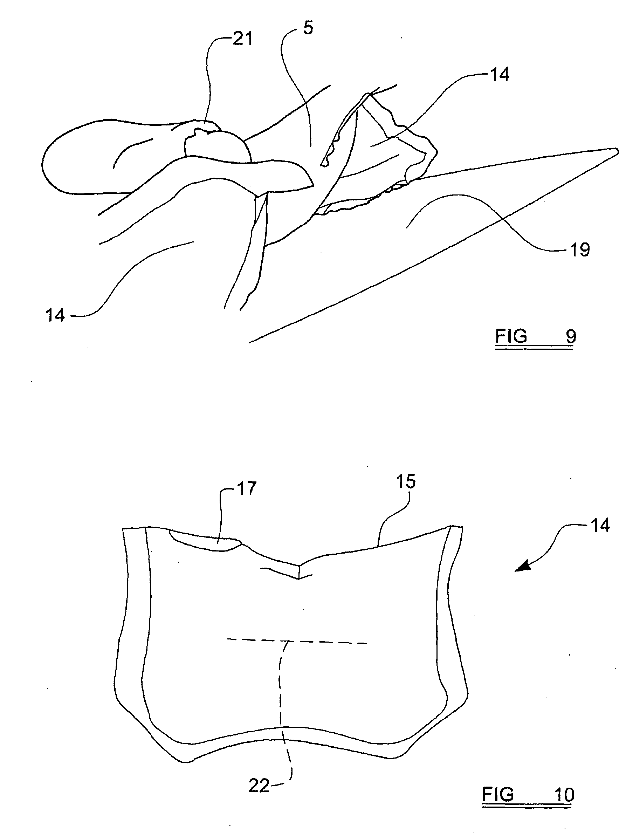

Figure 8 also shows an important function of the above-described structure of the secondary chambers. As illustrated, the interconnected regions 18 of the fabric layers defining the secondary chambers 14 affectively define localised narrowings of the chambers because the chambers are prevented from inflating to their maximum thickness in these regions. The resulting inflated secondary chambers 14 are thus configured to fold or buckle about the narrowed regions 18. Figure 8 shows an early stage in the buckling of the secondary chambers 14 under the force of the impact between the pedestrian 21 and the front of the primary chamber 5. Figure 9 shows a subsequent stage in the buckling of the secondary chambers 14, from which it will be appreciated that this buckling characteristic helps to absorb impact energy from the pedestrian 21. It has been found that providing secondary chambers susceptible to folding and/or buckling in this manner absorbs significant energy in the event of impact with a pedestrian and significantly improves the survival chances of the pedestrian. The arrangement also helps to prevent the pedestrian from being rebounded from the deformed airbag 1 which can often be a problem with pedestrian airbags which do not absorb sufficient crash energy.

It is possible to configure the airbag 1 such that only some of the plurality of secondary chambers 14 provided have the above-described folding structure, with the others simply being fully inflatable without the narrowing provided by the interconnected regions 18 of the fabric layers. In such an arrangement, it is envisaged that the larger secondary chambers 14 located towards the side edges of the windscreen 19 upon deployment will be provided with the folding structure, whilst the smaller ones located in a central region of the windscreen 19 will be convention chambers.

It is to be appreciated that whilst the present invention has been described above with reference to a specific embodiment, various changes or modifications can be made without departing from the scope of the invention. For example, the interconnected areas 18 of the fabric layers of the secondary chambers 14 which define the narrowed regions of the chambers upon inflation could be replaced with other arrangements to provide a similar technical effect. Figure 1 o illustrates one such example, in which the two half-sheet layers of fabric defining the secondary chamber 14 are interconnected by a simple line of stitching 22 which interconnects the layers along a linear seam. Other configurations of stitched seams are also possible.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention as defined by the claims.

## Claims

1. A motor vehicle having a windscreen and a pedestrian airbag arrangement, the airbag arrangement having an airbag (1) defining an inflatable volume for the receipt of inflating gas, the inflatable volume having a primary chamber (5) configured for inflation upon deployment of the airbag so as to extend over or across at least part of the windscreen (19); and a plurality of secondary chambers (14), each said secondary chamber (14) being configured for inflation upon deployment of the airbag (1) so as to adopt a respective deployed position between the primary chamber (5) and the windscreen (19) to thereby space the primary chamber (5) from the windscreen, the arrangement being **characterised in that** at least one of said secondary chambers (14) is of a type configured to inflate to a predetermined maximum thickness (t) measured across the chamber and has a structure defining a region (18) of the chamber which is restricted from inflating to said maximum thickness (t) to thereby provide a localised narrowing of the chamber (14) about which the chamber is configured to fold and/or buckle upon impact of a pedestrian (21) against the primary chamber (5).

2. A motor vehicle according to claim 1, wherein each said secondary chamber (14) is formed from two superimposed layers of flexible material, and wherein said at least one secondary chamber (14) is configured such that said layers of flexible material are interconnected in said region (18) of the chamber which is restricted from inflating to said maximum thickness (t).

3. A motor vehicle according to claim 2, wherein said region (18) has a two-dimensional area throughout which said layers are interconnected.

4. A motor vehicle according to claim 3, wherein said flexible material is fabric and said layers are stitched to one another throughout said region (18).

5. A motor vehicle according to claim 3, wherein said flexible material is fabric, and the yarns of one said layer are interwoven with the yarns of the other said layer throughout said region (18).

6. A motor vehicle according to claim 2, wherein said region is defined by a seam (22) interconnecting said layers.

7. A motor vehicle according to claim 6, wherein said seam (22) is substantially linear.

8. A motor vehicle according to claim 6, or claim 8, wherein said seam (22) is formed by stitching together said layers.

9. A motor vehicle according to any preceding claim, wherein staid region (18) of said at least one secondary chamber is completely surrounded by an inflatable region of the chamber which is substantially unrestricted from inflating to said maximum thickness (t).

10. A motor vehicle according to any preceding claim, wherein said at least one secondary chamber (14) is configured such that said region (18) is generally equi-spaced from said primary chamber (5) and from said windscreen (19) when the airbag (1) is fully inflated but un-deformed by impact.

11. A motor vehicle according to any preceding claim, wherein the deployed positions of the secondary chambers (14) are spaced apart from one another in a transverse direction across the vehicle.

12. A motor vehicle according to any preceding claim, wherein the secondary chambers (14) are made from flexible material which is thinner and/or of reduced weight compared to the material (2, 3) from which the primary chamber (5) is made.

13. A motor vehicle according to any preceding claims, wherein said plurality of secondary chambers (14) includes relatively small secondary chambers and relatively large secondary chambers, each said relatively large secondary chamber (14) being of said type configured to inflate to a predetermined maximum thickness (t) measured across the chamber and has a structure defining a region (18) of the chamber which is restricted from inflating to said maximum thickness (t) to thereby provide a localised narrowing of the chamber about which the chamber is configured to fold and/or buckle upon impact of a pedestrian against the primary chamber, and each said relatively small secondary chamber having no such structure to restrict inflation or provide a narrowing of the chamber.

14. A motor vehicle according to claim 13, wherein each said relatively small chamber (14) is configured to deploy against a central region of the vehicle windscreen (19), and each said relatively large chamber (14) is configured to deploy against a side region of the vehicle windscreen (19).

## Patentansprüche

1. Kraftfahrzeug mit einer Windschutzscheibe und einer Fußgänger-Airbaganordnung, wobei die Fußgänger-Airbaganordnung einen Airbag (1) aufweist, der ein füllbares Volumen zur Aufnahme von Füllgas definiert, wobei das füllbare Volumen eine Primärkammer (5) aufweist, die so ausgelegt ist, dass sie sich beim Entfalten des Airbags füllt und über oder quer über zumindest einen Teil der Windschutzscheibe (19) ausdehnt; sowie eine Vielzahl von Sekundärkammern (14) aufweist, wobei jede Sekundärkammer (14) so ausgelegt ist, dass sie sich beim Entfalten des Airbags (1) füllt, damit sie eine jeweilige entfaltete Stellung zwischen der Primärkammer (5) und der Windschutzscheibe (19) einnimmt, um dadurch die Primärkammer (5) von der Windschutzscheibe zu beabstanden, wobei die Anordnung **dadurch gekennzeichnet ist, dass** zumindest eine der Sekundärkammern (14) von einer Art ist, die so ausgelegt ist, dass sie sich bis zu einer vorher festgelegten Höchstdicke (t) füllt, die quer über die Kammer gemessen ist, und einen Aufbau aufweist, der einen Bereich (18) der Kammer definiert, der daran gehindert wird, sich bis zu der Höchstdicke (t) zu füllen, um dadurch eine örtlich begrenzte Verengung der Kammer (14) bereitzustellen, um die herum sich die Kammer beim Aufprall eines Fußgängers (21) auf die Primärkammer (5) auslegungsgemäß zusammenfaltet und/oder ausbeult.

2. Kraftfahrzeug nach Anspruch 1, wobei jede Sekundärkammer (14) aus zwei übereinandergelegten Schichten aus flexiblem Material geformt ist und wobei die mindestens eine Sekundärkammer (14) so ausgelegt ist, dass die Schichten aus flexiblem Material in dem Bereich (18) der Kammer, der daran gehindert wird, sich bis zu der Höchstdicke (t) zu füllen, miteinander verbunden sind.

3. Kraftfahrzeug nach Anspruch 2, wobei der Bereich (18) ein zweidimensionales Gebiet aufweist, in dem die Schichten durchgehend miteinander verbunden sind.

4. Kraftfahrzeug nach Anspruch 3, wobei das flexible Material Gewebe ist und die Schichten über den gesamten Bereich (18) miteinander vernäht sind.

5. Kraftfahrzeug nach Anspruch 3, wobei das flexible Material Gewebe ist und die Garne einer Schicht mit den Garnen der anderen Schicht über den gesamten Bereich (18) miteinander verwebt sind.

6. Kraftfahrzeug nach Anspruch 2, wobei der Bereich durch eine Naht (22) definiert ist, die die Schichten miteinander verbindet.

7. Kraftfahrzeug nach Anspruch 6, wobei die Naht (22) im Wesentlichen geradlinig ist.

8. Kraftfahrzeug nach Anspruch 6 oder Anspruch 8, wobei die Naht (22) durch Zusammennähen der Schichten geformt ist.

9. Kraftfahrzeug nach einem vorhergehenden Anspruch, wobei der Bereich (18) der mindestens einen Sekundärkammer vollständig von einem füllbaren Bereich der Kammer umgeben ist, der im Wesentlichen nicht daran gehindert wird, sich bis zur Höchstdicke (t) zu füllen.

10. Kraftfahrzeug nach einem vorhergehenden Anspruch, wobei die mindestens eine Sekundärkammer (14) so ausgelegt ist, dass der Bereich (18) ganz allgemein den gleichen Abstand zu der Primärkammer (5) und zu der Windschutzscheibe (19) aufweist, wenn der Airbag (1) vollständig gefüllt, jedoch nicht durch einen Aufprall verformt ist.

11. Kraftfahrzeug nach einem vorhergehenden Anspruch, wobei die entfalteten Stellungen der Sekundärkammern (14) in einer Querrichtung über das Fahrzeug hinweg voneinander beabstandet sind.

12. Kraftfahrzeug nach einem vorhergehenden Anspruch, wobei die Sekundärkammern (14) aus flexiblem Material gefertigt sind, das dünner und/oder leichter im Vergleich zu dem Material (2, 3) ist, aus dem die Primärkammer (5) gefertigt ist.

13. Kraftfahrzeug nach einem der vorhergehenden Ansprüche, wobei die Vielzahl von Sekundärkammern (14) relativ kleine Sekundärkammern und relativ große Sekundärkammern umfasst, jede relativ große Sekundärkammer (14) von der Art ist, die so ausgelegt ist, dass sie sich bis zu einer vorher festgelegten Höchstdicke (t) füllt, die quer über die Kammer gemessen ist, und einen Aufbau aufweist, der einen Bereich (18) der Kammer definiert, der daran gehindert wird, sich bis zu der Höchstdicke (t) zu füllen, um dadurch eine örtlich begrenzte Verengung der Kammer bereitzustellen, um die herum sich die Kammer beim Aufprall eines Fußgängers auf die Primärkammer auslegungsgemäß zusammenfaltet und/oder ausbeult, und jede relativ kleine Sekundärkammer keinen derartigen Aufbau zur Einschränkung des Füllens oder Bereitstellung einer Verengung der Kammer aufweist.

14. Kraftfahrzeug nach Anspruch 13, wobei jede relativ kleine Kammer (14) so ausgelegt ist, dass sie sich gegen einen mittigen Bereich der Fahrzeugwindschutzscheibe (19) entfaltet, und jede relativ große Kammer (14) so ausgelegt ist, dass sie sich gegen einen Seitenbereich der Fahrzeugwindschutzscheibe (19) entfaltet.

## Revendications

1. Véhicule à moteur comportant un pare-brise et un agencement d'airbag pour piétons, l'agencement d'airbag pour piétons comportant un airbag (1) délimitant un volume gonflable pour la réception de gaz de gonflage, le volume gonflable comportant une chambre primaire (5) configurée pour se gonfler lors du déploiement de l'airbag de façon à s'étendre sur ou à travers au moins une partie du pare-brise (19) ; et une pluralité de chambres secondaires (14), chaque dite chambre secondaire (14) étant configurée pour se gonfler lors du déploiement de l'airbag (1) de façon à adopter une position déployée respective entre la chambre primaire (5) et le pare-brise (19) afin d'écarter ainsi la chambre primaire (5) du pare-brise, l'agencement étant **caractérisé en ce qu'**au moins l'une desdites chambres secondaires (14) est d'un type configuré pour se gonfler à une épaisseur maximale (t) prédéterminée mesurée à travers la chambre et comporte une structure délimitant une région (18) de la chambre dont le gonflage à ladite épaisseur maximale (t) est empêché afin d'obtenir ainsi un rétrécissement localisé de la chambre (14) autour duquel la chambre est configurée pour se plier et/ou se déformer lors de l'impact d'un piéton (21) contre la chambre primaire (5).

2. Véhicule à moteur selon la revendication 1, dans lequel chaque dite chambre secondaire (14) est formée à partir de deux couches superposées de matériau flexible, et dans lequel ladite au moins une chambre secondaire (14) est configurée de telle manière que lesdites couches de matériau flexible sont reliées entre elles dans ladite région (18) de la chambre dont le gonflage à ladite épaisseur maximale (t) est empêché.

3. Véhicule à moteur selon la revendication 2, dans lequel ladite région (18) comporte une zone en deux dimensions à travers laquelle lesdites couches sont reliées entre elles.

4. Véhicule à moteur selon la revendication 3, dans lequel ledit matériau flexible est du tissu et lesdites couches sont cousues l'une à l'autre à travers ladite région (18).

5. Véhicule à moteur selon la revendication 3, dans lequel ledit matériau flexible est du tissu, et les fils d'une dite couche sont entrelacés avec les fils de l'autre dite couche à travers ladite région (18).

6. Véhicule à moteur selon la revendication 2, dans lequel ladite région est délimitée par une couture (22) reliant entre elles lesdites couches.

7. Véhicule à moteur selon la revendication 6, dans lequel ladite couture (22) est essentiellement linéaire.

8. Véhicule à moteur selon la revendication 6 ou la revendication 8, dans lequel ladite couture (22) est formée en cousant ensemble lesdites couches.

9. Véhicule à moteur selon l'une quelconque des revendications précédentes, dans lequel ladite région (18) de ladite au moins une chambre secondaire est complètement entourée par une région gonflable de la chambre dont le gonflage à ladite épaisseur maximale (t) n'est essentiellement pas empêché.

10. Véhicule à moteur selon l'une quelconque des revendications précédentes, dans lequel ladite au moins une chambre secondaire (14) est configurée de telle manière que ladite région (18) est globalement espacée à égale distance de ladite chambre primaire (5) et dudit pare-brise (19) quand l'airbag (1) est entièrement gonflé mais non déformé par un impact.

11. Véhicule à moteur selon l'une quelconque des revendications précédentes, dans lequel les positions déployées des chambres secondaires (14) sont espacées les unes des autres dans une direction transversale à travers le véhicule.

12. Véhicule à moteur selon l'une quelconque des revendications précédentes, dans lequel les chambres secondaires (14) sont fabriquées à partir de matériau flexible qui est plus fin et/ou dont le poids est réduit comparé au matériau (2, 3) à partir duquel la chambre primaire (5) est fabriquée.

13. Véhicule à moteur selon l'une quelconque des revendications précédentes, dans lequel ladite pluralité de chambres secondaires (14) comprend des chambres secondaires relativement petites et des chambres secondaires relativement grandes, chaque dite chambre secondaire (14) relativement grande étant dudit type configuré pour se gonfler à une épaisseur maximale (t) prédéterminée mesurée à travers la chambre et comportant une structure délimitant une région (18) de la chambre dont le gonflage à ladite épaisseur maximale (t) est empêché afin d'obtenir ainsi un rétrécissement localisé de la chambre autour duquel la chambre est configurée pour se plier et/ou se déformer lors de l'impact d'un piéton contre la chambre primaire, et chaque dite chambre secondaire relativement petite ne comportant aucune structure de ce type pour empêcher le gonflage ou obtenir un rétrécissement de la chambre.

14. Véhicule à moteur selon la revendication 13, dans lequel chaque dite chambre (14) relativement petite est configurée pour se déployer contre une région centrale du pare-brise (19) du véhicule, et chaque dite chambre (14) relativement grande est configurée pour se déployer contre une région latérale du pare-brise (19) du véhicule.
